(19) Europäisches Patentamt / European Patent Office / Office européen des brevets

(11) **EP 3 844 133 B1**

(12) **EUROPEAN PATENT SPECIFICATION**

(45) Date of publication and mention
of the grant of the patent:
**28.01.2026 Bulletin 2026/05**

(21) Application number: **19780368.7**

(22) Date of filing: **23.08.2019**

(51) International Patent Classification (IPC):
**C05F 11/10** (2006.01)    **C05G 3/00** (2020.01)
**C05G 5/30** (2020.01)

(52) Cooperative Patent Classification (CPC):
(C-Sets available)
**C05G 5/30**    (Cont.)

(86) International application number:
**PCT/IB2019/057122**

(87) International publication number:
**WO 2020/044189 (05.03.2020 Gazette 2020/10)**

(54) **SEAWEED EXTRACT COATED FERTILIZER FOR BETTER CROPS AND SOIL HEALTH**

DÜNGEMITTEL MIT SEETANGEXTRAKT ZUR BESSEREN NUTZPFLANZEN- UND
BODENGESUNDHEIT

ENGRAIS ENROBÉ D'EXTRAIT D'ALGUE POUR AMÉLIORER LES RÉCOLTES ET LA SANTÉ DU
SOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2018 US 201862723811 P**

(43) Date of publication of application:
**07.07.2021 Bulletin 2021/27**

(73) Proprietor: **Sabic Agri-Nutrients Company
31961 Jubail (SA)**

(72) Inventors:
• **HEGDE, Ravi**
  Bangalore 562125 (IN)
• **BURLA, Satish**
  Bangalore 562125 (IN)
• **GUPTA, Samik**
  Bangalore 562125 (IN)
• **DAJAM, Ahmed**
  Bangalore 562125 (IN)

(74) Representative: **J A Kemp LLP
80 Turnmill Street
London EC1M 5QU (GB)**

(56) References cited:
WO-A1-2016/186526    WO-A1-2018/211448
CN-A- 101 891 546    CN-A- 104 355 802
US-A1- 2016 297 723

• NABTI E ET AL: "Impact of seaweeds on
agricultural crop production as biofertilizer",
INTERNATIONAL JOURNAL OF
ENVIRONMENTAL SCIENCE AND
TECHNOLOGY, CENTER FOR ENVIRONMENT
AND ENERGY RESEARCH AND STUDIES (C E E
R S), IR, vol. 14, no. 5, 28 November 2016
(2016-11-28), pages 1119 - 1134, XP036224919,
ISSN: 1735-1472, [retrieved on 20161128], DOI:
10.1007/S13762-016-1202-1

(52) Cooperative Patent Classification (CPC): (Cont.)

C-Sets
**C05G 5/30, C05B 1/00, C05C 9/005, C05F 11/00;**
**C05G 5/30, C05C 9/005, C05F 11/00;**
**C05G 5/30, C05F 11/00**

Description

## CROSS REFERENCE TO RELATED PATENT APPLICATIONS

This application claims the benefit of priority of U.S. Provisional Patent Application No. 62/723,811 filed August 28, 2018.

## BACKGROUND OF THE INVENTION

### A. Field of the Invention

The invention generally concerns a seaweed or seaweed extract coated fertilizer. Such a coated fertilizer can have improved physical and/or chemical properties that can be beneficial for the agricultural industry and contribute towards sustainability through better soil health.

### B. Description of Related Art

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients and to create the right balance of nutrients.

Seaweeds and seaweed extracts are rich in micronutrients and natural growth hormones, including cytokinins, auxins, and gibberellins. Typically, seaweeds and seaweed extracts are applied to plants or soils as liquids, such as by foliar spray or powder spreading, multiple times during the crop cycle (US 6,893,479; Csizinszky, Proc. Fla. State Hort. Soc. 1994; 107:139-142). Seaweeds and seaweed extracts can include other fertilizers as well (US 8,197,572, WO 2016022582). Both application methods are labor and cost intensive and can be a burden to farmers. Also, liquid fertilizers can be difficult and costly to transport.

To reduce these burdens, some have attempted to produce fertilizers with seaweed or seaweed extract homogeneously mixed throughout the fertilizer prior to solidifying or granulating the fertilizer (CN 101486619; WO 2014080352; CN 104151114; WO 2015075676). Others have mixed a seaweed extract with a dehydrating agent and a polymer or have mixed seaweed with fillers and enzyme inhibitors and applied the mixtures to a fertilizer core or mixed with a fertilizer (IN 243311; US 8,133,919). However, the addition of dehydrating agents, polymers, or enzyme inhibitors increases the complexity and costs of producing the fertilizer. Some have coated agro-materials that can possibly include seaweeds with adjuvants to control the delivery of the agro-materials (US 2005/0064001). Some have coated inorganic calcium compounds, humic acid, or peat with coatings that can potentially include a seaweed (WO 2014020187). However, these coated fertilizers do not provide high concentrations of primary nutrients such as nitrogen, phosphorus, potassium, and/or sulfur and are likely very slow release fertilizers. CN101891546A discloses urea granules being coated with a kelp extract by spraying said granules with said extract, followed by a drying step. The coated urea shows a slower dissolution in water compared to an uncoated urea granulate.

Thus, improved fertilizers that reduce cost, complexity, transport difficulties, and application burdens are still needed.

## SUMMARY OF THE INVENTION

A solution has been discovered to at least some of the aforementioned problems associated with currently available fertilizers. The solution is premised on the development of a coated fertilizer according to claim 1. The coated fertilizer has desirable physical, chemical, and plant growth properties and can be produced, transported, and applied in a less complex, less costly, and more convenient manner when compared with the currently available fertilizers. Further, the coated fertilizer can contain high concentrations of nitrogen, phosphorus, potassium, or a combination thereof and can contain additional nutrients and micronutrients over what is provided from the fertilizer core, seaweed, or seaweed extract alone, with minimum or no change in the base nutrient content of the core. These nutrients can be provided in a single application by using the coated fertilizers described herein. Not to be bound by theory, it is believed that the natural bio-polymers in the seaweed and/or seaweed extract contribute to slowing the rapid degradation or dissolution of the fertilizer core, while also providing a better water holding capacity. The coated fertilizers disclosed herein can provide better soil/rhizosphere health, better crop yield, better root development, and better uptake of soil-bound nutrients. Further, the seaweed or seaweed containing coating functions in the presence of chemical fertilizers and can introduce an optimal balance of organic/inorganic components with less carbon footprint.

According to claim 1 of the present invention, a coated fertilizer is disclosed. The coated fertilizer contains a fertilizer core containing a urea-based fertilizer, and/or an inorganic fertilizer containing one or more of nitrogen, phosphorus, or potassium, or a combination thereof and the coated fertilizer contains a coating containing *Kappaphycus alvarezii* and/or a *Kappaphycus alvarezii* extract. The core contains at least 50, 60, 70, 80, 90, 91, 92, 93, 94, 95, 96, 97, 98, or 99 wt.% based on the total weight of the core, including all ranges and subranges there between, of the urea-based fertilizer, the inorganic fertilizer, or the combination thereof. At least a portion of the core's surface is in direct contact with the coating. The coating is a dry coating. The coating does not contain gypsum or water insoluble polymer(s) other than native water insoluble polymers present in the seaweed or seaweed extract. In some instances, the coating does not contain enzyme inhibitors other than native enzyme inhibitors present in the seaweed or extract thereof.

In some aspects, the urea-based fertilizer is urea and/or the inorganic fertilizer is a fertilizer providing nitrogen, phosphorus, and potassium (NPK), diammonium phosphate (DAP), monoammonium phosphate (MAP), single super-phosphate (SSP), triple super-phosphate (TSP), or a combination thereof. In some instances, the core can consist of the urea-based fertilizer or the inorganic fertilizer. In some instances, the core can consist of urea, NPK, DAP, monoammonium phosphate, SSP, TSP, or a combination thereof.

The seaweed or seaweed extract always comprises *Kappaphycus alvarezii* and/or a *Kappaphycus alvarezii* extract. In some aspects, the seaweed or seaweed extract additionally comprises *Ascophyllum Nodosum, Ecklonia maxima, Durvillea potatorum, Macrocystis pyrifera, Sargassum* spp., and/or *Laminaria digitate* or their extracts. In some preferred instances, the seaweed or seaweed extract is or is from *Kappaphycus alvarezii* and *Ascophyllum Nodosum.* The seaweed extract can be extracted by use of any solvent. In some instances, the solvent is an aqueous or organic solvent. In some instances, the solvent is water.

In some instances the coating optionally contains one or more of water, one or more solubilizing agent(s), one or more binder(s), and/or one or more anticaking agent(s). In some instances the coated fertilizer optionally contains one or more additional coatings. The additional coatings can, in some instances, contain one or more seaweed or seaweed extract, one or more binder(s) and/or one or more anticaking agent(s). In some instances, the water contained in the coating can be less than 5% by weight of the coating. Such a coating with reduced water or moisture content can be considered a dried or dry coating. In some instances, the water content is 4 wt. %, 3 wt. %, 2 wt. %, 1 wt. %, or less, compared to the weight of the coating. The solubilizing agent can be $Na_2CO_3$, NaOH, KOH, $Ca(OH)_2$, $Mg(OH)_2$, and/or $K_2CO_3$. The binder can be triple super phosphate (TSP), guar gum, waxes such as paraffin wax, oils such as linseed oils and paraffin oils, flours and starches such as bleached wheat flour, gelatins, and/or polymers. The anticaking agent can be any anticaking agent known, such as surfactants, amines, liquid carriers such as oil and/or water, and/or a URESOFT® product supplied by Kao Chemicals, such as URESOFT®-125, or any combination thereof.

In some aspects, the coating is not dispersed throughout the fertilizer core. In some instances, the coating forms a shell at least partially coating the core. The coating can coat at least 50 %, 70 %, or 90%, or more of the surface of the core. In some instances, the coating decreases the dissolution in water of the core as compared to the core without the coating. Not to be bound by theory, this may be done through the ability of the coating to absorb water and moisture and reducing the amount of water over a period of time coming into contact with the core. Therefore, and without wishing to be bound by theory, the seaweed and/or seaweed extract containing coating can impart controlled or slowed or delayed release properties to the coated fertilizers of the present invention. In some instances, the coating has a mean average thickness of 2 to 70 micrometers ($\mu$m), or any range therein.

The coated fertilizer can contain or exclude additional ingredients. The additional ingredients included or excluded can be a preservative, insecticide, fungicide, fragrance, micronutrient, fertilizer, plant growth agent, nutrient, secondary nutrient, trace element, plant protection agent, filler, etc., or a combination thereof. In some instances, the coating does not contain an additional ingredient (e.g., consists of seaweed and/or seaweed extract).

The coated fertilizer of the present invention can contain the above referenced additional ingredients therein at any concentration, ratio, percent by weight, percent by volume, etc. In some instances, the coating is 0.001 wt. % to 10 wt. %, 0.001 wt. % to 9 wt. %, 0.001 wt. % to 8 wt. %, 0.001 wt. % to 7 wt. %, 0.001 wt. % to 6 wt. %, 0.01 wt. % to 10 wt. %, 0.1 wt. % to 10 wt. %, 0.5 wt. % to 10 wt. %, 0.5 wt. % to 9 wt. %, 0.5 wt. % to 8 wt. %, 0.5 wt. % to 7 wt. %, 0.5 wt. % to 6 wt. %, 1 wt. % to 6 wt. %, or any range therein, of the coated fertilizer based on the total weight of the coated fertilizer.

The coated fertilizer of the present invention can be included with other fertilizers in a fertilizer composition. In some instances, the coated fertilizer is contained in a blended fertilizer or a compounded fertilizer. By way of example, a blended fertilizer composition of the present invention can be formulated into a quick release fertilizer. Alternatively, the blended fertilizer composition can be formulated into a slow-release fertilizer. In some instances, the blended fertilizer composition is formulated into a specialty fertilizer.

Also disclosed in the context of the present invention is a method of producing a coated fertilizer according to claim 11. The method includes contacting the core disclosed herein with a coating composition under conditions sufficient to form a coated fertilizer, wherein the coating composition contains *Kappaphycus alvarezii,* a *Kappaphycus alvarezii* extract, or a combination thereof. Contacting the core with the coating composition can be achieved in part by spraying a liquid comprising the coating composition onto the core. The method can include a step of drying the coating composition in contact with the core. The method can include a step of heating the coating composition and/or the core before contacting the core with the coating composition. The coated fertilizer produced is the fertilizer according to claim 1. The coating composition can produce the coating disclosed herein on the core disclosed herein when dried.

The coating composition of the present invention can contain the components therein at any concentration, ratio, percent by weight, percent by volume, etc. In some instances, the coating composition contains seaweed and/or seaweed extract at 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 20 wt. %, 25 wt. %, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. %, 90 wt. %, 95 wt. %, 100 wt. %, or any concentration or range therein, of the coating composition based on the total weight of the coating composition.

In one aspect of the present invention, a method of producing a fertilizer blend is disclosed. The method can include combining the coated fertilizer disclosed herein with one or more additional fertilizer(s), secondary nutrient(s), trace element(s), plant protection agent(s), and/or filler(s).

According to claim 15 of the present invention, disclosed is a method of fertilizing. The method includes applying the coated fertilizer according to claim 1 to a soil, a crop, or a combination thereof. Application of the coated fertilizer can promote plant growth and/or plant health.

The following includes definitions of various terms and phrases used throughout this specification.

The term "fertilizer" is defined as a material applied to soils or to plant tissues to supply one or more plant nutrients essential or beneficial to the growth of plants and/or stimulants or enhancers to increase or enhance plant growth. Non-limiting examples of fertilizers include materials having one or more of urea, ammonium nitrate, calcium ammonium nitrate, one or more superphosphates, binary NP fertilizers, binary NK fertilizers, binary PK fertilizers, NPK fertilizers, molybdenum, zinc, copper, boron, cobalt, and/or iron. In some aspects, fertilizers include agents that enhance plant growth and/or enhance the ability for a plant to receive the benefit of a fertilizer, such as, but not limited to biostimulants, urease inhibitors, and nitrification inhibitors. In some particular instances, the fertilizer is urea, such as urea granules.

The terms "about," "approximately," and "substantially" are defined as being close to, as understood by one of ordinary skill in the art. In one non-limiting instance, the terms are defined to be within 10%, preferably, within 5%, more preferably, within 1%, and most preferably, within 0.5%.

The terms "wt. %," "vol. %," or "mol. %" refers to a weight, volume, or molar percentage of a component, respectively, based on the total weight, the total volume, or the total moles of material that includes the component. In a non-limiting example, 10 grams of a component in 100 grams of the material that includes the component is 10 wt. % of component.

The use of the words "a" or "an" when used in conjunction with any of the terms "comprising," "including," "containing," or "having" in the claims or the specification may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or open-ended and do not exclude additional, unrecited elements or method steps.

The compositions and process of the present invention can "comprise," "consist essentially of," or "consist of" particular ingredients, components, compositions, *etc.,* disclosed throughout the specification.

In preferred instances, the seaweed or seaweed extract coating can be dried onto the core and have 5 wt. % or less of water.

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting.

## BRIEF DESCRIPTION OF THE DRAWINGS

Advantages of the present invention may become apparent to those skilled in the art with the benefit of the following non-limiting detailed description and upon reference to the accompanying non-limiting drawings. The drawings may not be to scale.

**FIG. 1** is a schematic diagram depicting an exemplary method of producing a non-limiting embodiment of a coated fertilizer of the present invention.

**FIG. 2** is a non-limiting representation of a cross-section of a fertilizer core coated by a seaweed and/or seaweed extract containing coating of the present invention.

**FIGS. 3A-3B** are SEM images of surface views of **(FIG. 3A)** Urea and **(FIG. 3B)** BS-07 granules.

**FIGS. 4A-4D** are SEM images of cross sectional view of **(FIG. 4A)** urea, **(FIG. 4B)** BS-01, **(FIG. 4C)** BS-03, and **(FIG.**

**4D)** BS-07 granules.

**FIG. 5** shows water solubility of urea, BS-01, BS-02, and BS-03 (respectively bottles from left to right) at 0 min. **(A),** 5 min. **(B),** 15 min. **(C),** and 25 min. **(D).**

## DETAILED DESCRIPTION OF THE INVENTION

The coated fertilizer of the present invention provides an elegant solution to problems associated with currently available fertilizers and seaweed or seaweed containing fertilizers. Notably, the coated fertilizer of the present invention has desirable physical, chemical, and/or plant growth properties and can be produced, transported, and applied in a less complex, less costly, and more convenient manner when compared to known fertilizers. The seaweed and/or seaweed extract coatings are less complex and less expensive and can avoid loss of the nutrients found in the seaweed and/or seaweed extract. In some aspects, the fertilizer can contain high concentrations of nitrogen, phosphorus, potassium, or a combination thereof and can contain additional nutrients and micronutrients over what is provided from the fertilizer core, seaweed, or seaweed extract alone, with minimum or no change in the base nutrient content of the core. These nutrients can be provided in a single application by using the coated fertilizers described herein. Not to be bound by theory, it is believed that the natural bio-polymers in the seaweed and/or seaweed extract can also contribute to slowing the rapid degradation or dissolution of the fertilizer core, while also providing a better water holding capacity. The coated fertilizers disclosed herein can provide better soil/rhizosphere health, better crop yield, better root development, and better uptake of soil-bound nutrients. Further, the seaweed or seaweed containing coating functions in the presence of chemical fertilizers and can introduce an optimal balance of organic/inorganic components with less carbon footprint.

These and other non-limiting aspects of the present invention are discussed in further detail in the following sections with reference to the Figures.

### A. Fertilizer Core with a Seaweed and/or Seaweed Extract Containing Coating

#### 1. Fertilizer core

The coated fertilizer of the present invention includes a fertilizer core containing a urea-based fertilizer or an inorganic fertilizer containing one or more of nitrogen, phosphorus, or potassium, or a combination thereof. The fertilizer of the core can be synthetically made. The urea-based fertilizer can be urea, a salt thereof, or an adduct thereof. The inorganic fertilizer can contain two or three of nitrogen, phosphorus, or potassium. Non-limiting examples of inorganic fertilizers include nitrogen and phosphorus (NP) fertilizers, nitrogen and potassium (NK) fertilizers, phosphorus and potassium (PK) fertilizers, nitrogen, phosphorus, and potassium (NPK) fertilizer, diammonium phosphate (DAP), monoammonium phosphate (MAP), single superphosphate (SSP), triple super-phosphate (TSP), or a combination thereof. The core can be a solid or semi solid at the time of coating the core or after coating the core, such as after drying the coated fertilizer.

The core contains at least 50 wt. % or more, based on the total weight of the core, of the urea-based fertilizer, the inorganic fertilizer, or the combination thereof. The core can contain at least 55 wt. %, 60 wt. %, 65 wt. %, 70 wt. %, 75 wt. %, 80 wt. %, 85 wt. %, 90 wt. %, 95 wt. %, 100 wt. %, or any concentration therein based on the total weight of the core.

In some preferred instances, the seaweed or seaweed extract used in the coating is not included within the core matrix; rather, the seaweed or seaweed extract is contained only on the surface of the core and/or may only partially penetrate the core's surface. A benefit of this is that the water absorption properties of the seaweed or seaweed extract can reduce the amount of water coming into contact with the core over a period of time, thereby creating a slowed or delayed release of nutrients from the core. The core can be preserved during storage due to the seaweed or seaweed extract coating's ability to absorb moisture present in the storage environment. The dissolution profile of the core can be prolonged during fertilization applications due to the seaweed or seaweed extract coating's ability to absorb moisture or water present during application of the coated fertilizer onto/into soil or plants.

#### 2. Seaweed and/or seaweed extract containing coating

The seaweed or seaweed extract in the coating of the coated fertilizer at least comprises *Kappaphycus alvarezii* and/or a *Kappaphycus alvarezii* extract. Non-limiting examples of additional seaweed include *Ascophyllum Nodosum, Ecklonia maxima, Durvillea potatorum, Macrocystis pyrifera, Sargassum* spp., and/or *Laminaria digitate.* In some preferred instances, the seaweed or seaweed extract is or is from *Kappaphycus alvarezii* and *Ascophyllum Nodosum.*

The extracts described herein can be extracts made through extraction methods known in the art and combinations thereof. Non-limiting examples of extraction methods include the use of liquid-liquid extraction, solid phase extraction, aqueous extraction, ethyl acetate, alcohol, acetone, oil, supercritical carbon dioxide, heat, pressure, pressure drop extraction, ultrasonic extraction, etc. Extracts can be a liquid, solid, dried liquid, resuspended solid, etc. The seaweed extract can be extracted by use of any solvent. In some instances, the solvent is an aqueous or organic solvent. In some instances, the solvent is water. In other instances, the extracting solvent can be an alcohol (e.g., methanol, ethanol, propanol, butanol, etc.) or a polyol (e.g., ethylene glycol, propylene glycol, butylene glycol, etc.). In other instances, the solvent can be a mixture of water and alcohol (e.g., aqueous-alcohol extracts), a mixture of water and polyol (e.g., aqueous-polyol extracts), a mixture of alcohol and polyols (e.g., alcohol-polyol extracts), or a mixture of water, alcohol, and polyol (e.g., aqueous-alcohol-polyol extracts), etc.

In instances where seaweed is used rather than a seaweed extract, the coating can be prepared by obtaining a desired seaweed plant or a specific seaweed part of the plant and crushing or macerating the plant. The crushed or macerated plant can then be applied to the surface of the fertilizer core. Optionally, the coated fertilizer core can be dried at ambient temperatures (e.g., 15 °C to 35 °C) or with heat.

The coating can contain or exclude additional ingredients. In some instances the coating optionally contains one or more of water, one or more solubilizing agent(s), one or more binders, and/or one or more anticaking agents. In some instances, the water contained in the coating can be less than 5% by weight of the coating and be considered a dried or dry coating. In some instances, the water content is less than 4 wt. %, 3 wt. %, 2 wt. %, or 1 wt. % of the weight of the coating. Non-limiting examples of solubilizing agents include sodium carbonate ($Na_2CO_3$), sodium hydroxide (NaOH), potassium hydroxide (KOH), calcium hydroxide ($Ca(OH)_2$), magnesium hydroxide ($Mg(OH)_2$), and/or potassium carbonate ($K_2CO_3$). Non-limiting examples of binders include triple super phosphate (TSP), waxes such as paraffin wax, oils such as linseed oils and paraffin oils, flours and starches such as bleached wheat flour, gelatins, polymers, gaur gum, calcium lignosulfonate, plaster of paris, cellulose, gluten, colloidal silica, kaolin, bentonite, polyethylene glycol (PEG), polycaprolactone, low molecular weight polyvinyl acetate, 60 wt.% urea solution, polyacrylamide, polyacrylic acid, polyacrylonitrile, hydroxypropyl methylcellulose (HPMC), biodegradable polylactic acid, and other biodegradable polymeric material such as polylactic acid, poly(3-hydroxypropionic acid), polyvinyl alcohol, poly ε-caprolactone, poly(L-lactide), polybutylene succinate, and biodegradable starch based polymers. Non-limiting examples of anticaking agents include surfactants, amines, liquid carriers such as oil and/or water, and/or a URESOFT® product supplied by Kao Chemicals (Kao Corporation, Japan), such as URESOFT®-125.

The coating can include or exclude a preservative, insecticide, fungicide, fragrance, micronutrient, fertilizer, plant growth agent, nutrient, secondary nutrient, trace element, plant protection agent, filler, etc., or combination thereof. In some instances, the coating does not contain any additional ingredient. In some instances, the coating does not contain gypsum or water insoluble polymer(s) other than native water insoluble polymers present in the seaweed or seaweed extract. Non-limiting examples of micronutrients include magnesium, calcium, zinc, molybdenum, boron, manganese, sulfur, iron, copper, molybdenum, zinc oxide (ZnO), boric oxide ($B_2O_3$), triple superphosphate (TSP), and/or magnesium oxide (MgO). In some instances, the micronutrients may be present in the form of inorganic salts. Examples of plant protection agents include, but are not limited to, insecticides, fungicides, growth regulators, nitrification inhibitors, and any mixtures thereof. Examples of fillers include, but are not limited to, clay, peat, etc. Examples of other fertilizer ingredients are for example described in Ullmann's Encyclopedia of Industrial Chemistry, 5th edition, 1987, Volume A10, pages 363 to 401, DE-A-41 28 828, DE-A-19 05 834, or DE-A-196 31 764.

The compositions can also include any number of combinations of additional ingredients described throughout this specification. The concentrations of the any ingredient within the compositions can vary. In non-limiting embodiments, for example, the compositions can comprise, consisting essentially of, or consist of, in their final form, for example, at least about 0.0001%, 0.0010%, 0.0020%, 0.0030%, 0.0040%, 0.0050%, 0.0060%, 0.0070%, 0.0080%, 0.0090%, 0.0100%, 0.0200%, 0.0300%, 0.0400%, 0.0500%, 0.0600%, 0.0700%, 0.0800%, 0.0900%, 0.1000%, 0.2000%, 0.3000%, 0.4000%, 0.5000%, 0.6000%, 0.7000%, 0.8000%, 0.9000%, 1.0%, 2.0%, 3.0%, 4.0%, 5.0%, 6.0%, 7.0%, 8.0%, 9.0%, 10%, 20%, 30%, 35%, 40%, 45%, 50%, 60%, 65%, 70%, 75%, 80%, 85%, 90%, 95%, 99%, 100%, or any range or concentration derivable therein, of at least one of the ingredients that are mentioned throughout the specification and claims. In non-limiting aspects, the percentage can be calculated by weight or volume of the total composition. A person of ordinary skill in the art would understand that the concentrations can vary depending on the addition, substitution, and/or subtraction of ingredients in a given composition.

It is contemplated that the coated fertilizer of the present invention can contain a coating in any amount, volume, thickness, coverage of the fertilizer core surface, etc. In some instances, the coating is 0.001 wt. % to 10 wt. %, 0.001 wt. % to 9 wt. %, 0.001 wt. % to 8 wt. %, 0.001 wt. % to 7 wt. %, 0.001 wt. % to 6 wt. %, 0.01 wt. % to 10 wt. %, 0.1 wt. % to 10 wt. %, 0.5 wt. % to 10 wt. %, 0.5 wt. % to 9 wt. %, 0.5 wt. % to 8 wt. %, 0.5 wt. % to 7 wt. %, 0.5 wt. % to 6 wt. %, 1 wt. % to 6 wt. %, or any range therein, of the coated fertilizer based on the total weight of the coated fertilizer, or any range therein. At least a portion of the fertilizer core's surface is in direct contact with the coating. In some instances, the coating is not dispersed throughout the fertilizer core. In some instances, the coating forms a shell at least partially coating the core. The coating can coat at least 55 %, 60 %, 65 %, 70 %, 75 %, 80 %, 85 %, 90 %, 95 %, or 100 % or more of the surface of the core. The core can be coated by the coating so that dissolution of water into the core is decreased as compared to the core without the coating. In some instances, the coating has a mean average thickness of 2 to 70 μm, 2 to 20 μm, 20 to 50 μm, or 10 to 40 μm, or any range or thickness therein.

### 3. Blended or compounded fertilizers

The coated fertilizer of the present invention can be included with other fertilizers in a fertilizer composition. In some instances, the coated fertilizer is contained in a blended fertilizer composition or a compounded fertilizer. Additional fertilizers can be chosen based on the particular needs of certain types of soil, climate, or other growing conditions to maximize the efficacy of the blended composition in enhancing plant growth and crop yield. The coated fertilizers herein can be blended with other fertilizer at any concentration. In some instances, the desired concentration is sufficient to meet the required nutrient or micronutrient content in the blend. By way of example, a blended fertilizer composition of the present invention can be formulated into a quick release fertilizer. Alternatively, the blended fertilizer composition can be formulated into a slow-release fertilizer. In some instances, the blended fertilizer composition is formulated into a specialty fertilizer.

### B. Method of Making the Coated Fertilizer

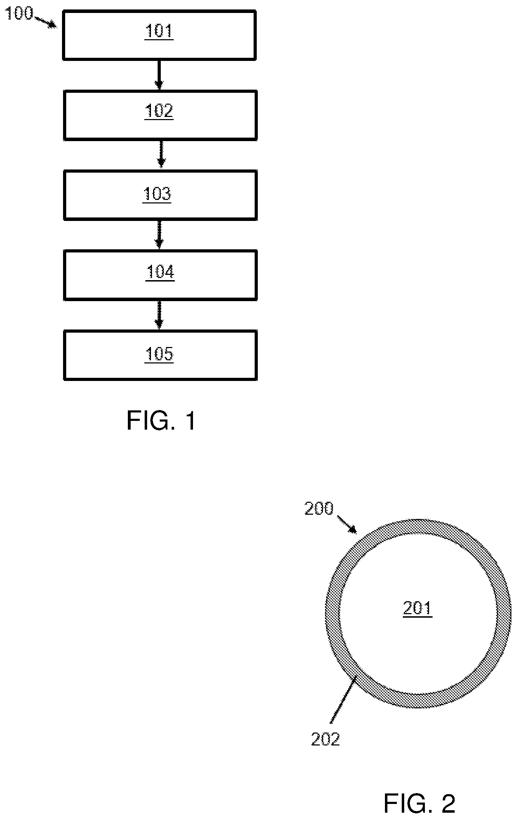

With reference to FIG. 1, a non-limiting method (100) of making a coated fertilizer can include obtaining a fertilizer core, seaweed and/or seaweed extract, and optionally additives (101). In some instances, the seaweed and/or seaweed extract and optional additives are mixed (102) to form a coating composition. One or more of the ingredients mixed can be heated during mixing or pre-heated before mixing. In some instances, the ingredients are heated to room temperature or up to 90 °C or more. If additional ingredients are included, the additional ingredients can be added at any time in the production of the coated fertilizer and/or can be added after the coated fertilizer is formed. Mixing can be performed by processes such as stirring, vortexing, homogenizing, shaking, pouring, etc.

The method (100) can include coating the fertilizer core with the seaweed, seaweed extract, and/or coating composition (103). The seaweed, seaweed extract, or coating composition can be applied to the core by a variety of methods, such as spraying, pouring, mixing, blending, etc. A fluid bed sprayer or coater, a liquid spray mixer, a rotating drum or pan, spray coating at discharge point, a paddle mixer, etc. can be used. In one non-limiting instance, the equipment and methods used in the Examples can be used.

In some instances, optionally, the seaweed, seaweed extract, and/or coating composition is dried on the fertilizer core to form a dry coating on the fertilizer core (104). The coated fertilizer can be dried by any means known, including exposure to ambient air, heated sweep gas, unheated sweep gas, heat, etc. If more than one layer is desired, the core coated can then be coated with a second, third, fourth, or more layers of seaweed, seaweed extract, and/or coating composition before or after the first coating dries on the core (not shown). For each layer, the amount of time used to apply the coating can be an amount sufficient to ensure that a substantially even layer is formed on the core and/or formed on the subsequent layer. In some instances, the application times can include 5 minutes, 10 minutes, 30 minutes, 1, hour, 2 hours, 3 hours, 4 hours, 5 hours, or more or any range therein (e.g., 5 minutes to 5 hours, 5 minutes to 1 hour, etc.). In some instances, the ingredients are heated to room temperature or up to 90 °C or more.

The method (100) can include optionally combining additional fertilizers with the coated fertilizer to form a blended or compounded fertilizer (105). Combining can be performed by any type of blending or mixing apparatus generally available in the art (e.g., WJ-700, WJ-900, or WJ-1000 Mixing Machines from Whirlston Machinery (Zhengzhou, China). Once combined, the fertilizer blend can be stored for future use or sale.

Referring to FIG. 2, the produced coated fertilizer (200) can include a fertilizer core (201) and a seaweed or seaweed extract coating (202). In this embodiment, the coating (202) is on the outer surface of the core (201) and is not present or distributed throughout the core's (201) matrix/internal volume. Although not shown, it is contemplated in the context of the present invention to also include seaweed or seaweed extract throughout the core's (201) matrix. However, in other instances, seaweed or seaweed extract is not present in the core's (201) matrix and is only present in the outer coating. Further, in other instances, seaweed solids or seaweed extract solids are not present in the core's (201) matrix and is only present in the outer coating.

The coated fertilizer can be produced in a batch or continuous process. In some instances, the coated fertilizer is produced on an industrial scale. In some instances, the coated fertilizer is produced at 1 kg/hour, or less, up to 10,000 kg/hour, or more.

### C. Use of the Fertilizer Compositions

In some instances, the coated fertilizer of the present invention can be used as a fertilizer. The coated fertilizer can be used alone, in a combined fertilizer blends, or with additional separate fertilizers. The coated fertilizer can be used in a method of fertilizing. The method can include applying a fertilizer composition to at least one of a soil, an organism, a liquid carrier, a liquid solvent, or a combination thereof.

Non-limiting examples of plants that can benefit from the fertilizer of the present invention include vines, trees, shrubs, stalked plants, ferns, etc. The plants may include orchard crops, ornamental plants, food crops, timber, and harvested plants. The plants may include Gymnosperms, Angiosperms, and/or Pteridophytes.

**EXAMPLES**

The present invention will be described in greater detail by way of specific examples. The following examples are offered for illustrative purposes only, and are not intended to limit the invention in any manner. Those of skill in the art will readily recognize a variety of noncritical parameters, which can be changed or modified to yield essentially the same results.

**Example 1**

**(Production of Fertilizer Coated with a Seaweed and/or Seaweed Extract)**

Described below are non-limiting examples of production of a seaweed and/or seaweed extract containing coating on a fertilizer core. Fertilizer cores were coated with different seaweed and/or seaweed extract containing coatings that contained a variety of different concentrations of seaweed and/or seaweed extract. See Table 1 for the coating formulations prepared for analysis in the Examples. Similarly, coating was also done successfully on a NPK fertilizer, 15:15:15 grade core with Algeafert Liquid. This demonstrates the process feasibility for other fertilizer cores.

Briefly, a fluid bed granulator with Human Machine Interface (HMI) controller (Bosch, Solidlab) was used to produce lab scale batches of coated fertilizers. The granulator was run using the Manual mode of operation for optimization of the process. The operation involved five major steps in sequence, specifically, material charging, material heating, coating process, drying, and finally, product discharge.

**Material Charging:** Air flow to the fluid bed granulator was set to approximately 100 $m^3$/hr, a temperature of 60 °C, spray air pressure between 0.2 bar and microclimate pressure 0.1 bar. Granulated urea (about 1.5 kg) was charged through the charging port available at the bottom of granulator. The port was closed once material feeding was completed.

**Material Heating:** The drying mode on the process step page on the user interface was selected for drying. The air volume was set at 250 $m^3$/hr and the temperature was set to 60 °C. The material was heated for 30 minutes.

**Coating:** Several seaweed and/or seaweed extract solutions for coating were prepared as follows. K. Sap liquid, 26-28%, an extract of *Kappaphycus alvarezii* was obtained from AquAgri Processing Pvt. Ltd., Tamilnadu, India and used for coating after diluting with water. Three grades of *Ascophyllum Nodosum* seaweed extract were obtained from Valagro, Italy - Algeafert liquid, 32%, Algeafert solid, and Algeafert Meal. Algeafert liquid was used for coating after diluting with water. Algeafert solid was ground using an IKA microfine grinder, <500 micron particles were collected and dissolved in water. Similarly, Algeafert Meal was ground to <500 micron particle size and suspended in 1% $K_2CO_3$ aqueous solution. Not to be bound by theory, it is believed that the $K_2CO_3$ solution aided in dissolution of the Algeafert Meal material by making a potassium salt of carboxyl/hydroxyl functionality of many of the Algeafert Meal constituents like amino acids, polysaccharides, etc.

The seaweed and/or seaweed extract containing coating material was continuously stirred and pumped through a peristatic pump. The peristatic pump contained two heads connected by piping to two spray nozzles that were located at the bottom portion of the fluid bed granulator. The rate of pumping varied depending on the need. A filter cage assembly (five filters) located at the top served as a filter to avoid flow of any bigger particles/granules. The entire process continued until the coating material was dispersed onto the fertilizer cores.

**Drying:** After coating was completed, the drying mode was turned on to dry the product by increasing the air volume to 400 $m^3$/hr and the air temperature was increased to 80 °C. Periodic sampling was done from the sample port to check for moisture content.

**Discharge:** After product drying, the inlet air flow and temperature was reduced to 100 $m^3$/hr and 30 °C. The product was collected by opening the charging port and discharging the coated fertilizer by increasing fluidizing air to 250 $m^3$/hr.

**Table 1**

| (Coating Formulations Prepared) Only BS-01 and BS04 are according to the invention. | | | | |
|---|---|---|---|---|
| **Form** | **Seaweed or Seaweed Extract** | **Coating Solution** | **Quantity (Kg)** | **Coating (% of coated fertilizer)** |
| **BS-01** | K. Sap Liquid, 26-28% | 30mL K. Sap + 270mL water | 1.5 | 2 vol/wt |
| **BS-02** | AlgeaFert Solid | 12g AlgeaFert Solid + 240mL water | 1.2 | 1 wt/wt |

(continued)

| Form | Seaweed or Seaweed Extract | Coating Solution | Quantity (Kg) | Coating (% of coated fertilizer) |
|------|------|------|------|------|
| **(Coating Formulations Prepared)** Only BS-01 and BS04 are according to the invention. | | | | |
| **BS-03** | AlgeaFert Meal | 12g AlgeaFert Meal + 240mL of 1 % $K_2CO_3$ aqueous solution (Suspension) | 1.2 | 1 wt/wt |
| **BS-04** | K. Sap Liquid, 26-28% | 90mL K. Sap + 210mL water | 1.5 | 6 vol/wt |
| **BS-05** | AlgeaFert Liquid, 32% | 30mL AlgeaFert Liq + 270mL water | 1.5 | 2 vol/wt |
| **BS-06** | AlgeaFert Meal | 32g AlgeaFert Meal + 420mL of 1 % $K_2CO_3$ aqueous solution | 1.6 | 2 wt/wt |
| **BS-07** | AlgeaFert Meal | 64g AlgeaFert Meal + 800mL 1 % $K_2CO_3$ aqueous solution | 1.6 | 4 wt/wt |

**Example 2**

**(Characterization of Fertilizer Coated with Seaweed and/or Seaweed Extract)**

Coated fertilizers of Example 1 and uncoated urea granules (control) were evaluated for surface and cross-sectional morphology, nutrient content, moisture content, attrition, crush strength, bulk density, and dissolution of urea. All of the physical property measurements were performed using standard protocols (e.g., from fertilizer manuals) and described briefly in the following sections. Nutrient content values are shown in Table 2. Physical properties such as crush strength, attrition, moisture content and bulk density were measured for all the formulations with urea used as a standard. Values are shown in Table 3.

**Surface and Cross-Sectional Morphology:** The surface and cross-sectional morphology of the granules were carried out using Carl Zeiss EVO 18 (Zeiss, Germany) scanning electron microscope (SEM) in secondary electron imaging mode. For the surface study, the granules were mounted on SEM stubs using double sided carbon tape. For cross sectional imaging the granules were cut into half using a scalpel and mounted on SEM stubs using double sided carbon tape with the area of interest facing up. The samples were coated with a thin layer of gold to avoid charging effects during the SEM studies. The coated sample stubs were placed in the sample chamber of the SEM and images were recorded across the sample at different magnifications.

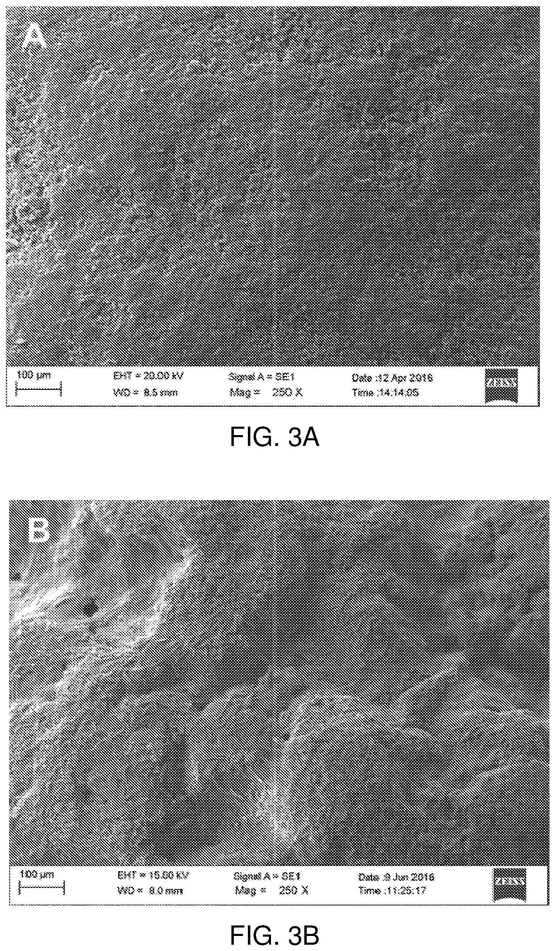

Representative SEM images of surface view of urea and formulation (Form.) BS-07 granules are shown in FIG. 3 to show the uniformity of coating. In comparison to urea surface, BS-07 granule showed much rougher surface. Smoother surfaces were observed with liquid seaweed extract coated granules (data not shown here).

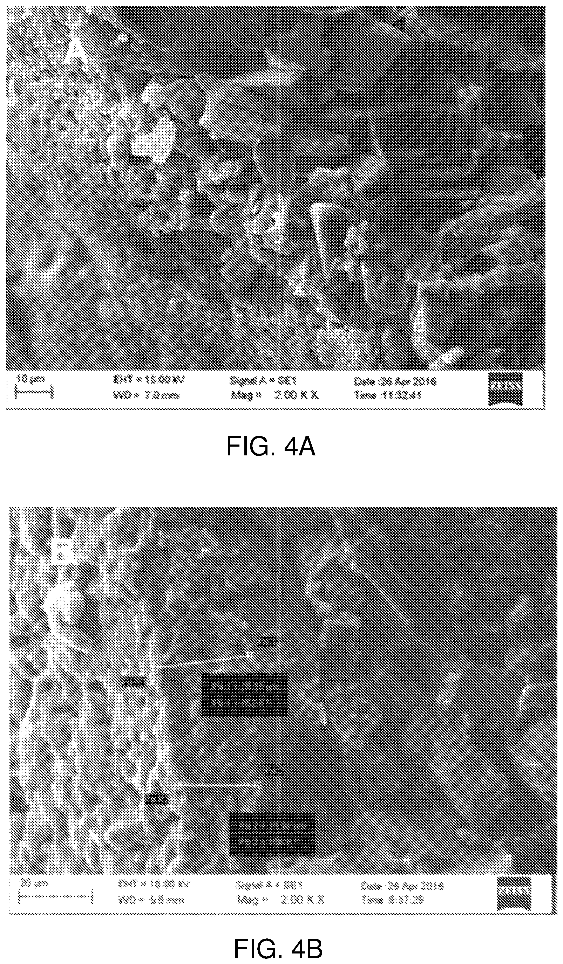

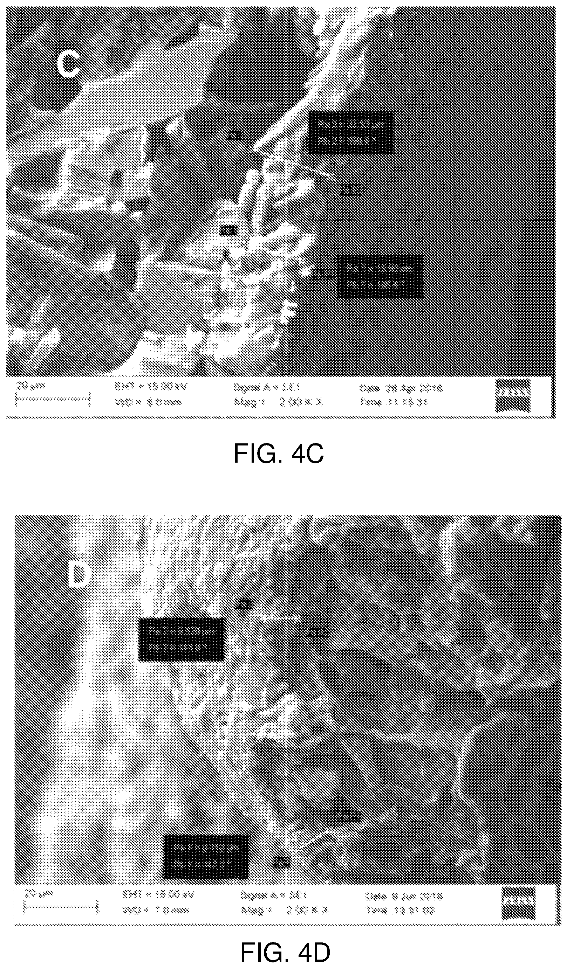

Representative SEM images of cross sectional areas of urea, BS-01, BS-03, and BS-07 granules are shown in FIG. 4. The objective of this study was to understand the thickness of the coating on the surface of urea granules. A layer of the coating was clearly seen in the images. Thickness was measured using image analysis software by visually looking at the coated layer in the images and measuring the thickness by dragging a cursor between points of interst. The software calculates the thickness based on number of pixels between the points of interest. FIG. 4B contains a line marking the distance between points of interest used to measure distances in that figure. Morphological difference were also observed between standard granular urea and the coated urea BS samples. The thickness of the coating for BS-01 and BS-03 were found to be around 20 to 50 $\mu$m and 10 to 40 $\mu$m, respectively. The coating thickness for BS-07 was found to be smaller, in the range of 2 to 20 $\mu$m. Not to be bound by theory, the differences were attributed to liquids in the coating solution piercing through the granules and crystalizing. The pierced solidified coated material inside the urea granule can interfere with measuring the coating thickness. Theoretical calculations were also performed to correlate coating thickness with percentage coating and found that 1% solid loading would lead to ~13 micron thickness.

**Nutrient Content:** Analysis of the nitrogen content of the coated fertilizers was performed. Briefly, nitrogen content analysis was performed using automated CHN analyzer (Elementar, Germany, model; Vario Cube) with a standard method by analyzing about 5 mg of powdered sample. All the formulations showed acceptable nitrogen content ($\geq$44.9 molar %). See Table 2. Additional plant beneficial micronutrients were determined by inductively coupled plasma mass spectrometry (ICPMS). See Table 2. Some of the considerably substantial quantities observed in these analyses are in bold in Table 2. From the data, it was determined that the coated fertilizers kept a desirable high nitrogen content and provided other micronutrients that can increase plant growth and/or production. BS-04 was not tested; however, the coating contained three times more seaweed extract than BS-01. Thus, it was expected that the coating of BS-04 would contribute three times as much of the measured nutrients as the coating of BS-01.

**Table 2**

| (Nitrogen and Microelement Estimation) Only BS-01 is according to the invention. | | | | | | | |
|---|---|---|---|---|---|---|---|
| Form | Nitrogen (molar %) | Microelement (PPM) | | | | | |
| | | Mn | Fe | Cu | Zn | B | Mo |
| BS-01 | 46.53 | <1 | **3.93** | <1 | <1 | <1 | <1 |
| BS-02 | 46.24 | <1 | **2.53** | <1 | <1 | <1 | <1 |
| BS-03 | 46.45 | <1 | **4** | <1 | <1 | <1 | <1 |
| BS-05 | 46.5 | <0.2 | **4.09** | <1 | <0.5 | <0.5 | <0.5 |
| BS-06 | 45.6 | 0.383 | **11.74** | <1 | 0.656 | 0.55 | <0.5 |
| BS-07 | 44.9 | 0.79 | **19.12** | <1 | **1.201** | **1.09** | <0.5 |
| Urea | 46.79 | <1 | 1.75 | <1 | 0.637 | <1 | <0.5 |

**Crush Strength:** Crush strength was measured using a Chatillon CS225 crush strength analyzer (Ametek, USA). Briefly, twenty coated urea granules from each formulation ranging in size from 2 to 4 mm were tested for crush strength. Each granule was placed on a platform (immobile phase) and the load cell (mobile phase) was adjusted to move downward at a speed of 10 mm/min. The load cell applied force on the granule until a sharp initial crack on granule surface was formed. The maximum load applied to make the initial crack was recorded as the crushing strength. The average crush strength of the twenty granules tested for each formula was considered the crush strength of the formula. See Table 3.

It was shown that most of the formulations had an acceptable crush strength (>2 kgf/granule) and at least one had an increased crush strength over uncoated urea (BS-04). See Table 3.

**Attrition:** Attrition is an indication of good adhesion of coating material on the fertilizer core. The analysis was performed using Copley, FRV 2000 model (Copley Scientific, UK). Briefly, a 100 cm³ portion of sieved granules ranging in size of 2 to 4 mm was weighed (W1) and placed into a test drum along with 100 g of stainless steel balls (50 Nos). The drum was closed and rotated for 10 min at 30 rpm. Then, the steel balls were separated from the sample and the material was screened through a 1 mm sieve using an electromagnetic sieve shaker. The material that did not pass through the sieve (granules over 1 mm) was weighed (W2). Results were calculated in terms of % weight loss due to attrition by dividing the weight of the material lost (W1-W2) by W1 and multiplying by 100:

$$\text{Weight loss (wt. \%)} = \frac{W1-W2}{W1} X100$$

It was determined that most of the coated urea granules had an acceptable attrition value of less than 0.3 %, indicating good adhesion of the coating material on the fertilizer core. See Table 3.

**Moisture Analysis:** Moisture content in the formulations were measured using Mettler Toledo halogen moisture analyzer, model HB43-S. Briefly, percentage of water in a sample (moisture content or MC) in weight percent was measured by comparing the weight of the sample prior to drying in the assay with the weight of the sample after being dried to a constant weight:

$$MC \ (Wt \ \%) = \left(\frac{(A-B)}{A}\right)*100$$

where MC is percentage of moisture in the sample, A is weight of sample before drying in assay, and B is constant weight of sample after drying.

It was determined that all of the coated urea granules had an acceptable moisture content and some retained moisture better than urea alone. See Table 3.

**Bulk Density:** Bulk density was determined by measuring the weight of 100 ml of sieved coated urea granules having a size range of 2 to 4 mm. Bulk density was calculated by dividing the weight of the sample by the volume of the sample as follows:

$$\text{Bulk density} = \frac{weight\ recorded\ by\ \textbf{\textit{the}}\ \ sample}{\textbf{\textit{known voulme}}\ of\ the\ sample}\left(\frac{\textbf{\textit{g}}}{\textit{cm3}}\right)$$

It was determined that the coated urea granules had a bulk density around the target density. See Table 3.

**Table 3**

| (Physical Properties of Coated Formulations) Only BS-01 and BS04 are according to the invention. | | | | |
|---|---|---|---|---|
| Form | Moisture (wt %) | Attrition (wt %) | Crush Strength (kgf/granule) | Bulk Density, Loose (g/cm³) |
| **BS-01** | 0.62 | 0.02 ± 0.007 | 1.96 | 0.697 ± 0.006 |
| **BS-02** | 0.53 | 0.277 ± 0.142 | 2.03 | 0.717 ± 0.003 |
| **BS-03** | 0.47 | 0.262 ± 0.337 | 2.29 | 0.68 ± 0.002 |
| **BS-04** | 0.64 | 0.355 ± 0.033 | 2.72 | 0.703 ± 0.001 |
| **BS-05** | 0.74 | 0.104 ± 0.076 | 1.79 | 0.717 ± 0.012 |
| **BS-06** | 0.82 | 0.133 ± 0.096 | 2.3 | 0.651 ± 0.001 |
| **BS-07** | 0.49 | 0.41 ± 0.237 | 2.24 | 0.653 ± 0.001 |
| **Target Value** | <1 | <0.3 | Min. 2 | 0.65 |
| **Urea** | 0.48 | 0.027 ± 0.003 | 2.62 | 0.693 ± 0.005 |

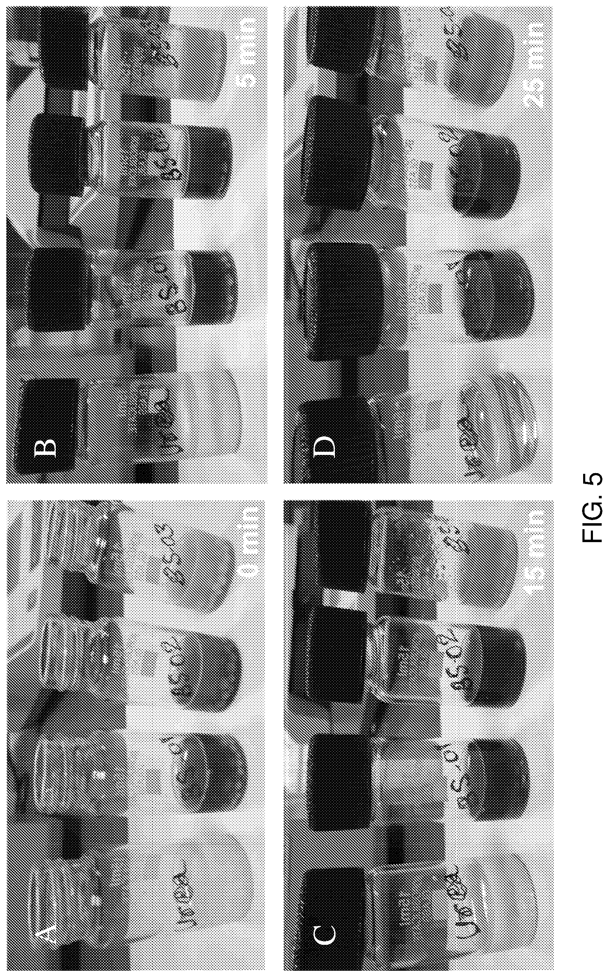

**Dissolution of Urea:** Dissolution of the coated urea core was tested to determine if the coated urea granules dissolve slower. Briefly, water and 2 grams of each urea, BS-01, BS-02, and BS-03 granules were added in a vial and shook at 150 RPM in a mechanical shaker. Photographs were taken at 0, 5, 15, and 25 min of shaking. *See* FIG. 5, 0 min. was considered as immediately after adding water but before shaking. This test indicates if the coated fertilizers tested were able to reduce the dissolution of the urea core in comparison to uncoated fertilizers. The dissolution of these test samples is expected to be much faster in this test than in typical use as a fertilizer.

It was observed that non-coated urea dissolved faster than the coated urea formulas tested. See FIG. 5. Urea completely dissolved at the end of 25 min. The coated urea samples dissolved less during the 25 min of testing and granules remained at 25 min. in the BS-01, BS-02, and BS-03 samples. By visual assessment, BS-03 had the greatest number and amount of granules remaining after 25 minutes, followed by BS-01, and then followed by BS-02. This indicates that the coated urea slowed urea release/dissolution.

Further quantitative solubility tests were performed with urea, BS-01, and BS-03. It was observed that BS-01 reduced urea water solubility by 4.9 % and BS-03 reduced urea water solubility by 18.6 % when compared to urea.

Briefly, weighed samples were slowly added to 25mL of millipore water and stirred at 600 RPM. The solubility test was performed at 22 °C throughout the test. The weighed samples were added until saturation of the water was reached, indicated by trace amount of solid remaining even after stirring for about three minutes. The remaining amount of sample was weighed and used to determine solubility of the samples. See Table 4.

**Table 4** Only BS-01 is according to the invention.

| | Urea | BS-01 | BS-03 |
|---|---|---|---|
| **Initial weight (g)** | 26.3261 | 23.0469 | 19.6754 |
| **Final weight (g)** | 5.7008 | 3.4362 | 2.8945 |
| **Difference (g)** | 20.6253 | 19.6107 | 16.7809 |
| **Solubility (grams/liter)** | 1031.265 | 980.535 | 839.045 |
| **% Reduction in solubility compared to urea** | | 4.92 | 18.64 |

**Example 3**

**(Coated Formulations Including Binders)**

For some coated fertilizers, binders were added to the coating to more effectively bind the seaweed extract to the fertilizer coat. Table 5 provides non-limiting examples of coated fertizers with a core of urea.

Water based binders can have little to no impact on the soil and are often less expensive than oil based binders. Water based binders generally add larger volumes to the coating than oil based binders.

Oil-based binders (*i.e.,* paraffin oil, linseed oil, etc.) can reduce the volume of the coating solution on the fertilizer in comparison to typical water based binders. Oil based binders can also avoid introduction of water to the fertilizer core and reduce water penetration into the core. Oil based binders can also help provide compatibility between hydrocarbons in the coating and the fertilizer core. Oil based binders and oil can also reduce or eliminate the need to dry the coating and require less energy input for production.

Binder by acidic reaction, such as ones using TSP or SSP to react with urea, can absorb moisture from surrounding atmosphere and form a sticky or gooey surface. This surface can act as a binder for seaweed or seaweed extract(s). These binders can be applied without the need for liquid spraying of the binder and without the need to actively add water to the coating.

Although there were additions of binders in the embodiments shown in Table 5, the composition of these embodiments were substantially similar to the non-binder embodiments above. Not to be bound by theory, it was expected that the results of physical property tests for these binder-containing embodiments would be very similar to the embodiments in the Examples above. Binders generally increased the binding of materials to the core and reduced weight loss due to abrasion over formulations that used no binder. However, some embodiments unexpectedly had substantially less loss of material in the abrasion tests, such as PC-5 that used paraffin oil as a binder.

**Table 5** Only OC-1 is according to the invention.

| Trial | Urea (g) | Binding Material | Seaweed Extract (SWE) | Protocol | Inference/Comments | Attrition (wt. %) |
|---|---|---|---|---|---|---|
| PC-1 | 50 | 0.5% (250mg) of powdered triple super phosphate (TSP) | 1% (500 mg) AlgeaFert Meal, particle size <200μm | Urea and powdered TSP mixed together in a glass bottle and shook for 15 min, then left at room temperature (RT) for an additional hour. Added SWE powder and mixed well. | Very minimal binding and low adhesion. Similar experiment with single super phosphate (SSP) showed similar results | Not Tested ("NT") |
| PC-2 | | | | Small quantity of water was sprayed to the above mixture and mixed | Coating needs optimization before acceptable | NT |

(continued)

| Trial | Urea (g) | Binding Material | Seaweed Extract (SWE) | Protocol | Inference/Comments | Attrition (wt. %) |
|-------|----------|------------------|----------------------|----------|--------------------|--------------------|
| PC-3 | 200 | Saturated aqueous TSP solution (3.94g added to urea) | 2.37g AlgeaFert Meal, <200$\mu$m | Sprayed binder onto urea in a rotating drum and allowed to rotate for 2-3 min. AlgeaFert meal powder, <200$\mu$m, was slowly added/sprayed using a plastic bottle with a cap containing multiple small holes. Rotation continued for another 2-3 min and finally hot air (~65°C) was blown for about 5 min. while the drum was rotating continuously | TSP Solubility low and coating needs optimization before acceptable | NT |
| PC-4 | 200 | 0.05% Guar gum in water (3g added to urea) | 2.84g AlgeaFert Meal, <200$\mu$m | | Difficulties observed while spraying because of high viscosity of Guar gum solution, but coating seems to be acceptable. | NT |
| PC-5 | 200 | Paraffin Oil - (3g added to urea) | 2.48g AlgeaFert Meal, <200$\mu$m | | Worked well, can reduce oil content significantly if needed | High |
| PC-6 | 200 | 10% $K_2CO_3$ in water (2.61g added to urea). | 2.11g AlgeaFert Meal, <200$\mu$m | | Worked well | NT |
| PC-7 | 200 | Added ~3mL 10% aqueous $K_2CO_3$ solution | 6.5g of AlgeaFert Meal powder sprayed | | Up to 2% loading of meal sample found to be feasible in these conditions, but greater than 2% possibly feasible under other conditions | 0.029 |
| PC-8 | 200 | UreSoft-125 was diluted 10 times with water(~5g added) | 5.6g of AlgeaFert Meal powder sprayed | | | 0.014 |
| OC-1 | 1000 | 5g of K. Sap powder added to 5 mL of Linseed oil, mixed well, and sonicated for ~10 min to suspend | | SWE oil suspension was added slowly to urea in a rotating drum and rotated for another 15 min. No heating was used. | Coating suspension became very thick | NT |
| OC-2 | 1000 | AlgeaFert solid was added to 5 mL of Linseed oil, mixed well, and sonicated for ~10 min to suspend | | | This worked very well | NT |

**Example 4**

**(Agronomy Testing)**

This experiment was designed to compare the performance of treatment of plants with urea fertilizer coated with seaweed and/or seaweed extract to urea alone or seaweed and/or seaweed extract alone under greenhouse conditions when applied to cucumber crops. Selected coated fertilizer of Example 1, along with control samples of uncoated urea or seaweed extracts were evaluated for agronomic performance by different application methods.

**Methodology:**

The experiment was carried out at Estidamah Center, Saudi Arabia, under low-tech greenhouse conditions. Cucumber (*Cucumis sativus L.*) seeds planted, in Rockwool blocks media. Twelve different treatments (Table 6 - Products and application methods) were tested with three replicates each under three application methods (fertigation, foliar and broadcasting) with control urea. The objective was to evaluate the performance of coated fertilizer by two different application methods, broadcasting and fertigation, and compare with the standard farmer's application method - foliar spray for liquid SWE and broadcasting for powdered SWE. Two weeks after planting, the Rockwool blocks containing seedlings were transplanted into pots with a diameter of 40 cm and height of 40 cm containing 45 Kg sandy soil representative to Saudi Arabian soil. Two plants were kept in each pot and 4 pots (8 plants) were used for each treatment. Plants were regularly fertilized with 45 mL per day of a nutrient solution with adjusted pH = 5.8 and Electrical Conductivity (EC) = 1.8. The potted plants were grown in a standard greenhouse condition at 21-27°C and 48-83% relative humidity. Treatments were arranged in a randomized complete block design.

**Treatments (Table 6):**

Three application methods were applied as below:
Fertigation: Treatment No 1, 4 and 12. The respective fertilizer was dissolved in 800 ml\treatment of irrigation water and applied to the soil directly after transplanting. The fertigation treatment was repeated weekly.
Broadcasting: Treatment No 2, 5, 7, 9 and 11. The respective fertilizer was mixed carefully with the top 1 cm of the soil after transplanting.
Farmer's standard practice: Treatment No 3, 6, 8 and 10 represented the farmer's traditional methods for comparison. Farmer's traditional application methods: 1) Urea applied to the soil in regular base as a liquid urea. 2) Seaweed applied in two forms, foliar application for treatments No 3 and 6 or distribution of powdered seaweed onto the soil for treatments 8 and 10. Foliar seaweed products were dissolved in 900 ml of water and sprayed on the plant leaves at the second week after transplanting. Foliar spraying was repeated on the fourth and sixth weeks after transplanting. For the powdered seaweed, it was applied to the soil on the same dates as the foliar spray.

**Results:**

Although, the experiments were conducted in the hot Saudi Arabia summer season, the crop performance and yield were still in the acceptable ranges. Cooling system were used continually to expose plants to grow under evapotranspiration (ET) standard conditions. This factor could have effected the results quality slightly. There was no significant effect on cucumber yield ($p < 0.05$) between urea and the urea fertilizer coated with seaweed and/or seaweed extract, but the results show trends of increased yield for the urea fertilizer coated with seaweed and/or seaweed extract. Yield data is shown in Table 7 (Cucumber yield in Kg) along with treatment numbers. Both foliar treatments of seaweed alone (Treatment number 3 and 6), showed higher yield compared to control urea treatments. In general, urea fertilizer coated with seaweed and/or seaweed extract either as fertigation or broadcasting showed higher cucumber yield in comparison with urea control treatment. The broadcasting treatment got higher yield in all urea fertilizer coated with seaweed and/or seaweed extract (1, 2, 4, and 5) by 4.8%, 4.8%, 3.4%, and 0.1%, respectively. Both fertigation treatments 1 and 4 yield increased by 1% and 1.5% respectively in comparison with urea control. The standard application method (farmer's method) with both concentration (AlgeaFert Meal 2% and 4%) showed negative response lower than control in both products 4 and 5.
Better performance of urea fertilizer coated with seaweed and/or seaweed extract can be attributed to the thin layer of seaweed extract that contains plant beneficial agents around urea granules. On the other hand, the lower yield from treatment No 10 is currently unexplained.

**Table 6** Only BS-01 is according to the invention. **(Products and Application Methods)**

| Treatment No. | Product | Application Method |
|---|---|---|
| 1 | BS-01 | Fertigation |

(continued)

| Treatment No. | Product | Application Method |
|---|---|---|
| 2 | BS-01 | Broadcast |
| 3 | K. Sap Liquid (same amount as in BS-01 treatment) | Foliar, Standard practice |
| 4 | BS-05 | Fertigation |
| 5 | BS-05 | Broadcast |
| 6 | AlgeaFert Liquid (same amount as in BS-05 treatment) | Foliar, Standard practice |
| 7 | BS-06 | Broadcast |
| 8 | AlgeaFert Meal powder, 2% (same amount as in BS-06 treatment) | Broadcast, Standard practice |
| 9 | BS-07 | Broadcast |
| 10 | AlgeaFert Meal powder, 4% (same amount as in BS-07 treatment) | Broadcast, Standard practice |
| 11 | Control (Urea) | Broadcast |
| 12 | Control (Urea) | Fertigation |

**Table 7** Only BS-01 is according to the invention.

| (Cucumber Yield in Kg) | | | | | | | | | |
|---|---|---|---|---|---|---|---|---|---|
| Application Method | Urea Control | Seaweed Coated Fertilizer | | | | Standard Practice* | | | |
| | | BS-01 | BS-05 | BS-06 | BS-07 | K. Sap Liquid | Algea-Fert Liquid | Algea-Fert Meal, 2% | Algea-Fert Meal, 4% |
| Broadcast | 175 (11) | 184 (2) | 184 (5) | 181 (7) | 176 (9) | | | 176 (8) | 163 (10) |
| Fertigation | 178 (12) | 180 (1) | 181 (4) | - | - | 180 (3) | 191 (6) | | |
| * Urea fertigation + the seaweed applied as foliar application in treatment (3) and (6) or Urea fertigation + the seaweed applied as powder to the soil directly for treatment (8) and (10). P. Value = 0.379; Numbers in parenthesis indicated treatment numbers referred to in Table 6. | | | | | | | | | |

**Claims**

1.  A coated fertilizer comprising:

    a fertilizer core comprising 50 wt. % or more of a urea-based fertilizer, or 50 wt. % or more of an inorganic fertilizer containing one or more of nitrogen (N), phosphorus (P), or potassium (K), or a combination thereof, wherein wt. % is based on the total weight of the core; and
    a seaweed coating in direct contact with at least a portion of the surface of the fertilizer core, wherein the seaweed coating comprises *Kappaphycus alvarezii,* a *Kappaphycus alvarezii* extract, or a combination thereof, wherein the seaweed coating does not contain gypsum or water insoluble polymer(s) other than native water insoluble polymers present in the *Kappaphycus alvarezii* or extract thereof, and wherein the seaweed coating is a dry coating.

2.  The coated fertilizer of claim 1, wherein the fertilizer core consists of a urea-based fertilizer, or an inorganic fertilizer containing one or more of nitrogen, phosphorus, or potassium, or a combination thereof.

3.  The coated fertilizer of claim 1 or 2, wherein the urea-based fertilizer is urea or wherein the inorganic fertilizer is NPK, diammonium phosphate (DAP), monoammonium phosphate (MAP), single superphosphate (SSP), triple superphosphate (TSP), or a combination thereof.

4.  The coated fertilizer of any one of claims 1 to 3, wherein:

the seaweed coating is not dispersed throughout the fertilizer core; and/or

the seaweed coating comprises one or more of water, a solubilizing agent, a binding agent, and an anti-caking agent, or any combination thereof; and/or

the seaweed coating comprises a solubilizing agent, preferably a sodium carbonate, sodium hydroxide, potassium hydroxide, calcium hydroxide, magnesium hydroxide, and/or potassium carbonate solubilizing agent; and/or

the seaweed coating consists of *Kappaphycus alvarezii,* a *Kappaphycus alvarezii* extract, or a combination thereof.

5. The coated fertilizer of any one of claims 1 to 4, wherein the coating further comprises a seaweed, a seaweed extract, or a combination thereof, wherein the species of seaweed or seaweed extract or the combination thereof is *Ascophyllum Nodosum, Ecklonia maxima, Durvillea potatorum, Macrocystis pyrifera, Sargassum spp.,* and *Laminaria digitata* or any combination thereof, and preferably wherein the seaweed extract is an aqueous extract.

6. The coated fertilizer of any one of claims 1 to 5, wherein:

the coated fertilizer comprises a sufficient amount of the seaweed coating to decrease dissolution in water of the fertilizer core as compared to the fertilizer core without the seaweed coating; and/or

the coated fertilizer comprises 0.001 wt. % to 8 wt. % seaweed coating based on the total weight of the coated fertilizer.

7. The coated fertilizer of any one of claims 1 to 6, wherein the fertilizer core is a urea core.

8. The coated fertilizer of any one of claims 1 to 7, wherein the seaweed coating has a mean average thickness of 2 to 70 micrometers ($\mu$m).

9. The coated fertilizer of any one of claims 1 to 8, wherein at least 50 %, 70 %, or 90%, or more of the surface of the fertilizer core is coated with the seaweed coating.

10. A fertilizer blend or a compounded fertilizer comprising the coated fertilizer of any one of claims 1 to 9 and an additional fertilizer.

11. A method for producing a coated fertilizer of any one of claims 1 to 9, the method comprising contacting a fertilizer core with a coating composition under conditions sufficient to form a coated fertilizer, wherein the coating composition comprises *Kappaphycus alvarezii,* a *Kappaphycus alvarezii* extract, or a combination thereof, and does not contain gypsum or water insoluble polymer(s) other than native water insoluble polymers present in the *Kappaphycus alvarezii* or extract thereof, and wherein the fertilizer core comprises a urea-based fertilizer, or an inorganic fertilizer containing one or more of nitrogen, phosphorus, or potassium, or a combination thereof.

12. The method of claim 11, wherein the method further comprises drying the coated fertilizer.

13. The method of claim 11 or 12, wherein:

the fertilizer core is heated before contact with the coating composition; and/or

the fertilizer core is contacted with the coating composition by spraying a liquid comprising the coating composition onto the fertilizer core.

14. The method of any one of claims 11 to 13, further comprising combining the coated fertilizer with one or more additional fertilizers to obtain a fertilizer blend or a compounded fertilizer.

15. A method of fertilizing, the method comprising applying the coated fertilizer of any one of claims 1 to 9 or the fertilizer blend or a compounded fertilizer of claim 10 to at least one of a soil, a crop, or a soil and a crop.

**Patentansprüche**

1. Beschichtetes Düngemittel, das umfasst:

einen Düngemittelkern, der 50 Gew.-% oder mehr eines Düngemittels auf Harnstoffbasis oder 50 Gew.-% oder mehr eines anorganischen Düngemittels, das eines oder mehrere der Elemente Stickstoff (N), Phosphor (P) oder Kalium (K) oder eine Kombination davon enthält, umfasst, wobei die Gew.-% auf das Gesamtgewicht des Kerns bezogen sind; und

eine Algenbeschichtung in direktem Kontakt mit mindestens einem Teil der Oberfläche des Düngemittelkerns, wobei die Algenbeschichtung *Kappaphycus alvarezii,* einen *Kappaphycus alvarezii*-Extrakt oder eine Kombination davon umfasst, wobei die Algenbeschichtung keinen Gips oder wasserunlösliche(s) Polymer(e) enthält, die nicht in dem *Kappaphycus alvarezii* oder dessen Extrakt vorhanden sind, und wobei die Algenbeschichtung eine trockene Beschichtung ist.

2. Beschichtetes Düngemittel nach Anspruch 1, wobei der Düngemittelkern aus einem Düngemittel auf Harnstoffbasis oder einem anorganischen Düngemittel besteht, das eines oder mehrere von Stickstoff, Phosphor oder Kalium oder eine Kombination davon enthält.

3. Beschichtetes Düngemittel nach Anspruch 1 oder 2, wobei das Düngemittel auf Harnstoffbasis Harnstoff ist oder wobei der anorganische Dünger NPK, Diammoniumphosphat (DAP), Monoammoniumphosphat (MAP), Einfachsuperphosphat (Single Superphosphate, SSP), Dreifachsuperphosphat (Triple Superphosphate, TSP) oder eine Kombination davon ist.

4. Beschichtetes Düngemittel nach einem der Ansprüche 1 bis 3, wobei:

die Algenbeschichtung nicht im gesamten Düngemittelkern dispergiert ist; und/oder
die Algenbeschichtung eines oder mehrere der Folgenden enthält: Wasser, ein Solubilisierungsmittel, ein Bindemittel und ein Antiklumpmittel oder eine beliebige Kombination davon; und/oder
die Algenbeschichtung ein Solubilisierungsmittel, vorzugsweise ein Natriumcarbonat-, Natriumhydroxid-, Kaliumhydroxid-, Calciumhydroxid-, Magnesiumhydroxid- und/oder Kaliumcarbonat-Solubilisierungsmittel, enthält; und/oder
die Algenbeschichtung aus *Kappaphycus alvarezii,* einem *Kappaphycus alvarezii*-Extrakt oder einer Kombination davon besteht.

5. Beschichtetes Düngemittel nach einem der Ansprüche 1 bis 4, wobei die Beschichtung ferner eine Alge, einen Algenextrakt oder eine Kombination davon umfasst, wobei die Algenart oder der Algenextrakt oder die Kombination davon *Ascophyllum Nodosum, Ecklonia maxima, Durvillea potatorum, Macrocystis pyrifera, Sargassum* spp. und *Laminaria digitata* oder eine Kombination davon ist, und vorzugsweise wobei der Algenextrakt ein wässriger Extrakt ist.

6. Beschichtetes Düngemittel nach einem der Ansprüche 1 bis 5, wobei:

das beschichtete Düngemittel eine ausreichende Menge der Algenbeschichtung enthält, um die Auflösung des Düngemittelkerns in Wasser im Vergleich zu dem Düngemittelkern ohne die Algenbeschichtung zu verringern; und/oder
das beschichtete Düngemittel 0,001 Gew.-% bis 8 Gew.-% Algenbeschichtung, bezogen auf das Gesamtgewicht des beschichteten Düngemittels, enthält.

7. Beschichtetes Düngemittel nach einem der Ansprüche 1 bis 6, wobei der Düngemittelkern ein Harnstoffkern ist.

8. Beschichtetes Düngemittel nach einem der Ansprüche 1 bis 7, wobei die Algenbeschichtung eine mittlere Dicke von 2 bis 70 Mikrometern ($\mu$m) aufweist.

9. Beschichtetes Düngemittel nach einem der Ansprüche 1 bis 8, wobei mindestens 50 %, 70 % oder 90 % oder mehr der Oberfläche des Düngemittelkerns mit der Algenbeschichtung beschichtet ist.

10. Düngemittelmischung oder ein zusammengesetztes Düngemittel, das das beschichtete Düngemittel nach einem der Ansprüche 1 bis 9 und ein zusätzliches Düngemittel enthält.

11. Verfahren zur Herstellung eines beschichteten Düngemittels nach einem der Ansprüche 1 bis 9, wobei das Verfahren das Inkontaktbringen eines Düngemittelkerns mit einer Beschichtungszusammensetzung unter Bedingungen umfasst, die zur Bildung eines beschichteten Düngemittels ausreichen, wobei die Beschichtungszusammensetzung *Kappaphycus alvarezii,* einen *Kappaphycus alvarezii*-Extrakt oder eine Kombination davon enthält und keinen Gips oder wasserunlösliche(s) Polymer(e) enthält, die nicht in dem *Kappaphycus alvarezii* oder dessen Extrakt vorhanden sind, und wobei der Düngemittelkern ein Düngemittel auf Harnstoffbasis oder ein anorganisches Düngemittel umfasst, das eines oder mehrere von Stickstoff, Phosphor oder Kalium oder eine Kombination davon enthält.

12. Verfahren nach Anspruch 11, wobei das Verfahren ferner das Trocknen des beschichteten Düngemittels umfasst.

13. Verfahren nach Anspruch 11 oder 12, wobei:

der Düngemittelkern vor dem Kontakt mit der Beschichtungszusammensetzung erhitzt wird; und/oder
der Düngemittelkern mit der Beschichtungszusammensetzung in Kontakt gebracht wird, indem eine Flüssigkeit, die die Beschichtungszusammensetzung enthält, auf den Düngemittelkern gesprüht wird.

14. Verfahren nach einem der Ansprüche 11 bis 13, das ferner das Kombinieren des beschichteten Düngemittels mit einem oder mehreren zusätzlichen Düngemitteln umfasst, um eine Düngemittelmischung oder einen zusammengesetzten Dünger zu erhalten.

15. Verfahren zum Düngen, wobei das Verfahren das Ausbringen des beschichteten Düngemittels nach einem der Ansprüche 1 bis 9 oder der Düngemittelmischung oder eines zusammengesetzten Düngemittels nach Anspruch 10 auf mindestens einen Boden, eine Kultur oder einen Boden und eine Kultur umfasst.

## Revendications

1. Engrais enrobé comprenant :

un noyau d'engrais comprenant 50 % en poids ou plus d'un engrais à base d'urée, ou 50 % en poids ou plus d'un engrais inorganique contenant un ou plusieurs parmi de l'azote (N), du phosphore (P), ou du potassium (K), ou une combinaison de ceux-ci, dans lequel le pourcentage en poids est basé sur le poids total du noyau ; et
un enrobage d'algue marine en contact direct avec au moins une portion de la surface du noyau d'engrais, dans lequel l'enrobage d'algue marine comprend *Kappaphycus alvarezii,* un extrait de *Kappaphycus alvarezii,* ou une combinaison de ceux-ci, dans lequel l'enrobage d'algue marine ne contient pas de gypse ou de polymère(s) insoluble(s) dans l'eau autre(s) que des polymères insolubles dans l'eau natifs présents dans *Kappaphycus alvarezii* ou son extrait, et dans lequel l'enrobage d'algue marine est un enrobage sec.

2. Engrais enrobé selon la revendication 1, dans lequel le noyau d'engrais est constitué d'un engrais à base d'urée, ou d'un engrais inorganique contenant un ou plusieurs parmi de l'azote, du phosphore, ou du potassium, ou une combinaison de ceux-ci.

3. Engrais enrobé selon la revendication 1 ou 2, dans lequel l'engrais à base d'urée est l'urée ou dans lequel l'engrais inorganique est NPK, le phosphate de diammonium (DAP), le phosphate de monoammonium (MAP), un superphosphate simple (SSP), un superphosphate triple (TSP), ou une combinaison de ceux-ci.

4. Engrais enrobé selon l'une quelconque des revendications 1 à 3, dans lequel :

l'enrobage d'algue marine n'est pas dispersé dans le noyau d'engrais ; et/ou l'enrobage d'algue marine comprend un ou plusieurs parmi de l'eau, un agent solubilisant, un agent liant, et un agent anti-agglomérant, ou toute combinaison de ceux-ci ; et/ou
l'enrobage d'algue marine comprend un agent solubilisant, de préférence un agent solubilisant au carbonate de sodium, à l'hydroxyde de sodium, à l'hydroxyde de potassium, à l'hydroxyde de calcium, à l'hydroxyde de magnésium, et/ou au carbonate de potassium ; et/ou
l'enrobage d'algue marine est constitué de *Kappaphycus alvarezii,* d'un extrait de *Kappaphycus alvarezii,* ou d'une combinaison de ceux-ci.

5. Engrais enrobé selon l'une quelconque des revendications 1 à 4, dans lequel l'enrobage comprend en outre une algue marine, un extrait d'algue marine, ou une combinaison de ceux-ci, dans lequel l'espèce d'algue marine ou d'extrait d'algue marine ou de leur combinaison est *Ascophyllum nodosum, Ecklonia maxima, Durvillea potatorum, Macrocystis pyrifera, Sargassum spp.,* et *Laminaria digitata* ou toute combinaison de celles-ci, et de préférence dans lequel l'extrait d'algue marine est un extrait aqueux.

6.  Engrais enrobé selon l'une quelconque des revendications 1 à 5, dans lequel :

l'engrais enrobé comprend une quantité suffisante d'enrobage d'algue marine pour diminuer une dissolution dans l'eau du noyau d'engrais comparativement au noyau d'engrais sans l'enrobage d'algue marine ; et/ou l'engrais enrobé comprend 0,001 % en poids à 8 % en poids d'enrobage d'algue marine sur la base du poids total de l'engrais enrobé.

7.  Engrais enrobé selon l'une quelconque des revendications 1 à 6, dans lequel le noyau d'engrais est un noyau d'urée.

8.  Engrais enrobé selon l'une quelconque des revendications 1 à 7, dans lequel l'enrobage d'algue marine a une épaisseur moyenne médiane de 2 à 70 micromètres ($\mu$m).

9.  Engrais enrobé selon l'une quelconque des revendications 1 à 8, dans lequel au moins 50 %, 70 %, ou 90 %, ou plus de la surface du noyau d'engrais est enrobée avec l'enrobage d'algue marine.

10.  Mélange d'engrais ou engrais composé comprenant l'engrais enrobé de l'une quelconque des revendications 1 à 9 et un engrais supplémentaire.

11.  Procédé de production d'un engrais enrobé de l'une quelconque des revendications 1 à 9, le procédé comprenant la mise en contact d'un noyau d'engrais avec une composition d'enrobage dans des conditions suffisantes pour former un engrais enrobé, dans lequel la composition d'enrobage comprend *Kappaphycus alvarezii,* un extrait de *Kappaphycus alvarezii,* ou une combinaison de ceux-ci, et ne contient pas de gypse ou de polymère(s) insoluble(s) dans l'eau autre(s) que des polymères insolubles dans l'eau natifs présents dans *Kappaphycus alvarezii* ou son extrait, et dans lequel le noyau d'engrais comprend un engrais à base d'urée, ou un engrais inorganique contenant un ou plusieurs parmi de l'azote, du phosphore, ou du potassium, ou une combinaison de ceux-ci.

12.  Procédé selon la revendication 11, dans lequel le procédé comprend en outre le séchage de l'engrais enrobé.

13.  Procédé selon la revendication 11 ou 12, dans lequel :
le noyau d'engrais est chauffé avant le contact avec la composition d'enrobage ; et/ou le noyau d'engrais est mis en contact avec la composition d'enrobage par pulvérisation d'un liquide comprenant la composition d'enrobage sur le noyau d'engrais.

14.  Procédé selon l'une quelconque des revendications 11 à 13, comprenant en outre la combinaison de l'engrais enrobé avec un ou plusieurs engrais supplémentaires pour obtenir un mélange d'engrais ou un engrais composé.

15.  Procédé de fertilisation, le procédé comprenant l'application de l'engrais enrobé de l'une quelconque des revendications 1 à 9 ou du mélange d'engrais ou d'un engrais composé de la revendication 10 sur au moins l'un parmi un sol, un plant, ou un sol et un plant.

FIG. 1

FIG. 2

| 100 μm | EHT = 20.00 kV | Signal A = SE1 | Date :12 Apr 2016 | |
| | WD = 8.5 mm | Mag = 250 X | Time :14:14:05 | |

FIG. 3A

| 100 μm | EHT = 15.00 kV | Signal A = SE1 | Date :9 Jun 2016 | |
| | WD = 8.0 mm | Mag = 250 X | Time :11:25:17 | |

FIG. 3B

FIG. 4A

FIG. 4B

FIG. 4C

FIG. 4D

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62723811
- US 6893479 B
- US 8197572 B
- WO 2016022582 A
- CN 101486619
- WO 2014080352 A
- CN 104151114
- WO 2015075676 A

- IN 243311
- US 8133919 B
- US 20050064001 A
- WO 2014020187 A
- CN 101891546 A
- DE 4128828 A
- DE 1905834 A
- DE 19631764 A

**Non-patent literature cited in the description**

- **CSIZINSZKY**. *Proc. Fla. State Hort. Soc.*, 1994, vol. 107, 139-142

- Ullmann's Encyclopedia of Industrial Chemistry. 1987, vol. A10, 363-401